# EUROPEAN PATENT APPLICATION

(11) **EP 1 017 243 A2**
(43) Date of publication of application: **05.07.2000**
(21) Application number: 99250449.8
(22) Date of filing: 28.12.1999
(51) Int. Cl.: H04Q 11/00

(54) **Optical switch and optical switched network**

(30) Priority: 28.12.1998 JP 37388298
(71) Applicant: NEC CORPORATION, Tokyo (JP)
(72) Inventor: Suemura, Yoshihiko, Minato-ku, Tokyo (JP); Henni, Naoya, Minato-ku, Tokyo (JP)
(74) Representative: Patentanwälte Wenzel & Kalkoff

(57) **Abstract**

An optical switch according to the present invention comprises an optical gate for selecting space 30, optical wavelength routers 31, 37 and 38, optical gates for selecting a wavelength 32, 35 and 39 and an optical combiner 33. A wavelength selecting part 50 (50C) is composed by the optical wavelength routers 31, 37 and 38 and the optical gates 32, 35 and 39. Four input ports of an optical selector 5C are respectively connected to four optical wavelength multiplexers/splitters 4. A wavelength multiplexed optical signal output from a desired optical wavelength multiplexer/power divider can be selectively input to the optical wavelength router 31 by turning on one of optical gates 30-0 to 30-3 and turning off the remaining three. The optical wavelength routers 31, 37 and 38 are an arrayed waveguide grating configured by a silica waveguide and its wavelength transmission characteristic forms a Latin square. Such a wavelength transmission characteristic is easily realized by suitably determining the transmitted bandwidth and the free spectral range of the arrayed waveguide grating.

## Description

### BACKGROUND OF THE INVENTION

### 1. FIELD OF THE INVENTION

The present invention relates to an optical switch used for a communication network, a network in which parallel computers are mutually connected and others and an optically switched network, particularly relates to an optical switch and an optical switched network wherein the number of required optical switching elements can be reduced.

### 2. DESCRIPTION OF THE RELATED ART

An optical switched network for switching an optical signal using an optically switch is expected as means for realizing a large capacity network which cannot be realized in a conventional type electric network. To date, an optical switch utilizing the electro-optic effect, acousto-optic effect and others of a crystal such as lithium niobate and an optical switch using a semiconductor optical amplifier as a gate are devised. As for an optical switched network using these optical switches, ones provided with various configurations are also proposed. In a conventional type optical switch, optical multiplexing technology such as space-division multiplexing and wavelength-division multiplexing is used.

However, in a conventional type optical switched network, the number of optical gates required for configuring an optical switch is equivalent to the square of the number of nodes particularly in a space division type optical switch. Therefore, the above conventional type optical switched network has a problem that when the number of nodes is increased, the cost is greatly increased and an optical switch becomes large-sized.

In a conventional type optical switch using wavelength multiplexing technology, as the number of optical wavelength multiplexers/demultiplexers for generating wavelength multiplexed light is increased, loss induced by multiplexing is increased. Particularly, if the number of nodes is large and optical multiplexing/demultiplexing is repeated, S/N of an optical signal is small in a conventional type optical switch and it is difficult to secure a satisfactory transmission characteristic.

Also, as optical signals having the same wavelength pass the same path depending upon the configuration of a switch, there is also a problem that crosstalk between optical signals is increased. The interference of another optical signal having the same wavelength in an optical signal to be received is called coherent crosstalk and as a signal of a difference frequency component of both optical signals functions as the noise of a base band signal to be received, the quality of a received signal is deteriorated remarkably. As requirements for the extinction ratio of an optical switching element become severe to prevent coherent crosstalk, the cost is increased.

### SUMMARY OF THE INVENTION

A first object of the present invention is to provide an optical switch and an optically switched network wherein the number of required switching elements such as optical gates is small.

A second object of the present invention is to provide an optical switch and an optical switched network wherein the loss of an optical signal can be reduced.

A third object of the present invention is to provide an optical switch and an optical switched network wherein coherent crosstalk can be sufficiently reduced without increasing the on-off ratio of an optical gate so much.

An optical switch according to the present invention comprises at least one cascaded optical circuit, a first optical gate array connected to the last of the at least one optical circuit and an optical multiplexer connected to the first optical gate array. The optical circuit is provided with a second optical gate array composed of plural optical gates and an optical wavelength router for outputting an optical signal input from an input port connected to each optical gate of the second optical gate array from any output port according to wavelength.

An optical switched network according to the present invention comprises plural optical transmitters for sending optical signals of plural wavelengths, an optical combiner/splitter for combining optical signals sent from plural optical transmitters and branching said combined optical signal and outputting from plural output ports and the above plural optical switches connected to each output port of plural optical combiners/splitters.

### BRIEF DESCRIPTION OF THE DRAWINGS

The above and other objects, features and advantages of the present invention will become more apparent from the following detailed description when taken in conjunction with the accompanying drawings wherein:
Fig. 1 is a block diagram showing the configuration of a first conventional type example;
Fig. 2 is a block diagram showing the configuration of a second conventional type example;
Fig. 3 is a block diagram showing the configuration of an optical wavelength multiplexer/splitter in the second conventional type example;
Fig. 4 is a block diagram showing the configuration of an optical selector in the second conventional type example;
Fig. 5 is a block diagram showing the configuration of an optical selector in a third conventional type example;
Fig. 6 is a block diagram showing the configuration of a first embodiment;
Fig. 7 is a block diagram showing the configuration of an optical wavelength multiplexer/splitter in the first embodiment;
Fig. 8 is a block diagram showing the configuration of an optical selector in the first embodiment;
Fig. 9 shows the wavelength transmission characteristic of an optical wavelength router 31 shown in Fig. 8;
Fig. 10 shows the wavelength transmission characteristic of an optical wavelength router 37 shown in Fig. 8;
Fig. 11 shows the wavelength transmission characteristic of an optical wavelength router 38 shown in Fig. 8;
Fig. 12 is a block diagram showing the configuration of a second embodiment;
Fig. 13 is a block diagram showing the configuration of a transmission node in the second embodiment;
Fig. 14 is a block diagram showing the configuration of an optical wavelength multiplexer/splitter in the second embodiment;
Fig. 15 is a block diagram showing the configuration of an optical selector in the second embodiment;
Fig. 16 shows the divided wavelength transmission characteristic of an optical wavelength router 40 shown in Fig. 15;
Fig. 17 shows the divided wavelength transmission characteristic of the optical wavelength router 40 shown in Fig. 15;
Fig. 18 is a block diagram showing the configuration of a receiving node in the second embodiment;
Fig. 19 is a block diagram showing the configuration of a third embodiment;
Fig. 20 is a block diagram showing the configuration of an optical selector in the third embodiment;
Fig. 21 is an outside perspective view showing the configuration of an array type optical gate in the third embodiment;
Fig. 22 shows the wavelength transmission characteristic of an optical wavelength router 31 shown in Fig. 20;
Fig. 23 is a block diagram showing the configuration of an optical selector in a fourth embodiment;
Fig. 24 shows the wavelength transmission characteristic of an optical wavelength router 31 shown in Fig. 23;
Fig. 25 shows the wavelength transmission characteristic of an optical wavelength router 37 shown in Fig. 23;
Fig. 26 is a block diagram showing the configuration of a fifth embodiment;
Fig. 27 is a block diagram showing the configuration of an optical selector in the fifth embodiment; and
Fig. 28 shows the wavelength transmission characteristic of an optical wavelength router 38 shown in Fig. 27.

### DETAILED DESCRIPTION OF THE PREFERRED EMBODIMENTS:

First, before an optical switch and an optically switched network according to the present invention are described, conventional type optical switch and optical switched network will be described to facilitate the understanding of the present invention.

### [First conventional type example]

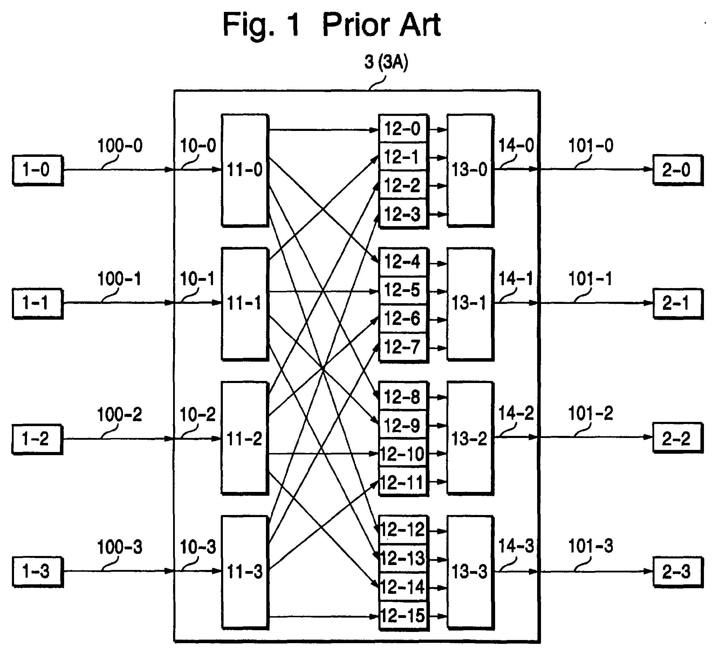

For example, an optical switched network using an optical switch using a semiconductor optical amplifier as an optical gate for the application to a network in which parallel computers are mutually connected is proposed in a first document: Y. Maeno et al.,"A Novel Interconnection Network Using Semiconductor Optical Amplifier Gate Switches for Shared Memory Multiprocessors", Proceedings of the 3^{rd} International Conference on Massively Parallel Processing Using Optical Interconnections (MPPOI' 96), pp.239. Fig. 1 is a block diagram showing the configuration of the optical switch network equivalent to the first conventional type example proposed in the first document. Fig. 1 shows an optical switched network having four inputs and four outputs and an optical signal sent from a transmission node 1 is input to an optical switch 3 (3A) via an optical fiber 100 and the optical signal switched by the optical switch 3A is received by a receiving node 2 via an optical fiber 101.

In the optical switch 3A, an optical signal input from an input port 10 is branched by an optical splitter 11 and is input to four optical gates 12. The optical gate 12 is a semiconductor optical amplifier, is turned on when current flows and transmits an optical signal, and is turned off when current flow is shut off and cuts out an optical signal. The four optical gates 12 are respectively connected to four optical wavelength multiplexers 13. An arbitrary input port 10 and an output port 14 can be connected by turning on/off the optical gate 12.

For example, an optical signal input from an input port 10-0 can be output from an output port 14-1 by turning on an optical gate 12-4. The optical switch 3A is a so-called crossbar switch that intrinsic paths exist for arbitrary combination of the input port 10 and the output port 14. The optical gate 12 is equivalent to a cross point and as the optical gate 12 to be turned on is uniquely determined when the input port 10 and the output port 14 to respectively be connected are specified, control theory is simple. Also, as a crossbar switch is completely non-blocking, contention control is not required except that simultaneous connection of different input ports 10 to the same output port 14 is tried.

However, in the optical switched network in the first conventional technology, there is a problem that the number of optical gates required for configuring the optical switch 3 (3A) is equivalent to the square of the number of nodes and when the number of nodes is increased, the cost is greatly increased and the optical switch becomes large-sized.

### [Second conventional type example]

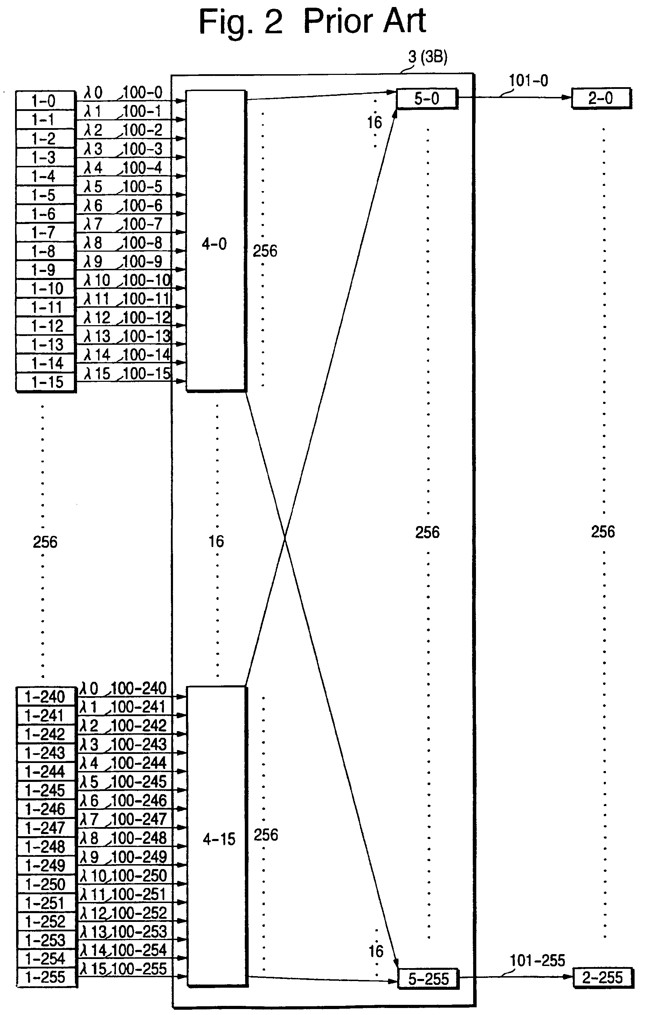

To solve the problem in the above first conventional type example, an optical switched network wherein the number of optical gates is reduced by using wavelength-division multiplexing technology is proposed in a second document: S. Araki et al., "A 2. 56 Tb/s Throughput Packet/Cell-Based Optical Switch-Fabric Demonstrator", Proceedings of 24th European Conference on Optical Communication, vol.3, pp.125-129, Sep. 1998. Fig. 2 is a block diagram showing the configuration of the optical switched network equivalent to the second conventional type example proposed in the second document. Fig. 2 shows an optical switched network having 256 inputs and 256 outputs.

In the above optical switched network, 16 wavelengths λ0 to λ15 are used for the wavelength of an optical signal, λ0 is allocated as the send wavelength of transmission nodes 1-0, 1-16 not shown, 1-32 not shown, ---, 1-240, λ1 is allocated as the transmission wavelength of transmission nodes 1-1, 1-17 not shown, 1-33 not shown, ---, 1-241, λ2 is allocated as the send wavelength of send nodes 1-2, 1-18 not shown, 1-34 not shown, ---, 1-242 and similarly, λ15 is allocated as the transmission wavelength of send nodes 1-15, 1-31 not shown, 1-47 not shown, ---, 1-255.

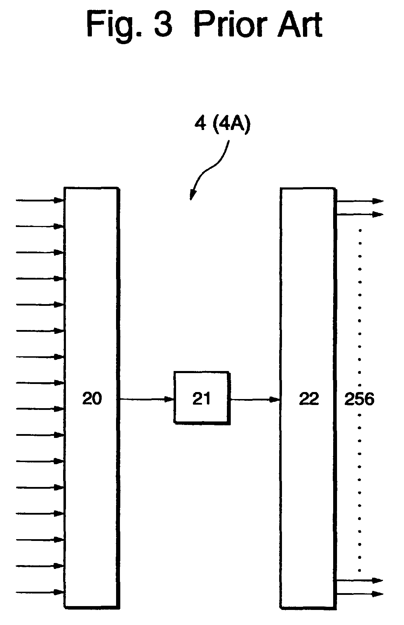

Optical signals having wavelengths λ0 to λ15 transmitted from 16 transmission nodes 1 to which different transmission wavelengths are allocated are input to an optical wavelength multiplexer/splitter 4. Fig. 3 is a block diagram showing the configuration of an optical wavelength multiplexer/splitter 4 (4A). Input optical signals having wavelengths λ0 to λ15 are multiplexed by an optical wavelength multiplexer 20 and are branched in 256 ways by 1x256 optical power divider 22 after the wavelength multiplexed optical signal is amplified by an optical fiber amplifier 21. The wavelength multiplexed optical signal output from the optical wavelength multiplexer/splitter 4 (4A) is distributed to 256 optical selectors 5.

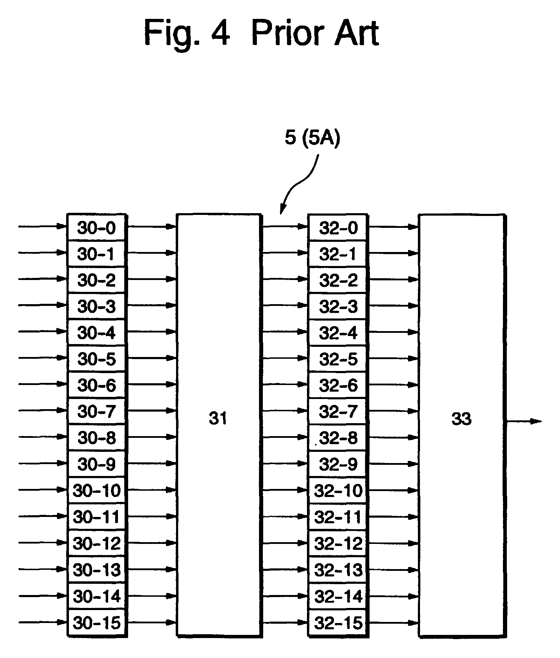

Fig. 4 is a block diagram showing the configuration of the optical selector 5 (5A). The optical selector 5A is composed of optical gates 30 for selecting space, an optical wavelength router 31, optical gates 32 for selecting wavelength and an optical combiner 33. Sixteen input ports of the optical selector 5A are respectively connected to 16 optical wavelength multiplexer/splitter 4 (4A). Of optical gates 30-0 to 30-15, a wavelength multiplexed optical signal output from a desired optical wavelength multiplexer/splitter 4 can be selectively input to the optical wavelength router 31 by turning on one and turning off the remaining 15.

The optical wavelength router 31 is an arrayed waveguide grating and its wavelength transmission characteristic forms Latin square in a third document: R. Barry et al., "Latin Routers, Design and Implementation", IEEE Journal of Lightwave Technology, vol.11, no.5/6, pp891-899. Even when a wavelength multiplexed optical signal of wavelengths λ0 to λ15 is input from any input port of the optical wavelength router 31, the wavelength multiplexed optical signal is branched every wavelength and is output from different output ports owing to the above wavelength transmission characteristic forming Latin square.

Only an optical signal having an arbitrary wavelength of a wavelength multiplexed optical signal input to the optical wavelength router 31 can be output from the optical combiner 33 by turning on one of optical gates 32-0 to 32-15 and turning off remaining 15 gates. That is, the optical selector 5A can selectively output an optical signal transmitted from an arbitrary transmission node 1 by combining the selection of space by the optical gate 30 and the selection of wavelength by the optical gate 32.

The optical signal output from the optical selector 5A is received by a receiving node 2.

As described above, receiving nodes 2-0 to 2-255 can respectively receive an optical signal sent from an arbitrary transmission node 1 and the optical gates 30 and 32 turned on in the optical selector 5A at that time are uniquely determined for a desired transmission node 1. Therefore, an optical switch 3B in the second conventional type example is also a crossbar switch.

In the optical switched network in the second conventional type example, 8192 pieces of optical gates are used. In the meantime, to realize a 256 x 256 optical switched network with the similar configuration to that in the first conventional type example, 65536 pieces of optical gates are required. That is, in the second conventional type example, a 256 x 256 optical switched network can be composed with the number of optical gates equivalent to 1/8, compared with that in the first conventional type example, the cost can be reduced by quantity and the network can be miniaturized by quantity.

In the optical switched network in the second conventional type example, in each optical selector 5A, the optical gates for selecting space 30 of the same number as the number of the optical wavelength multiplexers/splitters 4 and the optical gates for selecting wavelength 32 of the same number as the number of wavelengths are also required. To minimize cost, the size of the device and complication of control, it is desirable that the number of switching elements such as an optical gate is reduced possibly.

### [Third conventional type example]

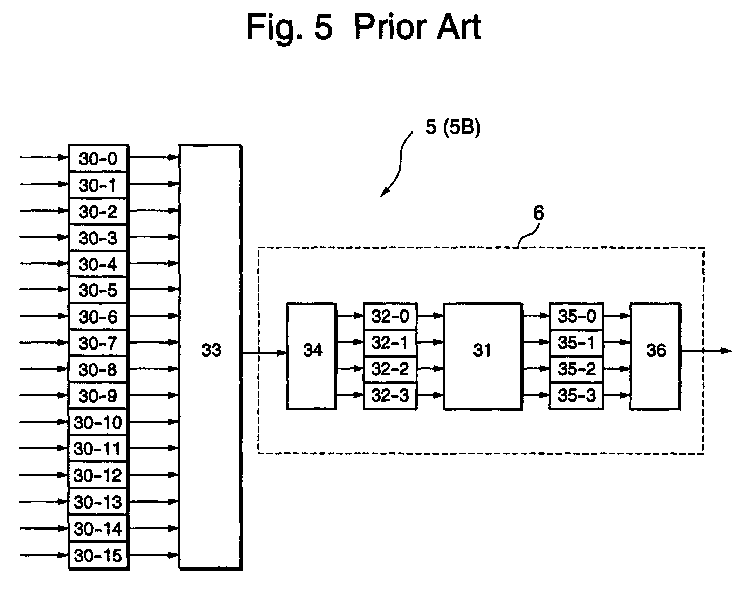

For one of methods of reducing the number of optical gates for selecting wavelength 32, an optical switched network using a multistage wavelength selector is proposed in a fourth document: Suemura et al., "10 Gb/s/port, 256 x 256 WD/SD optical crossbar switch using SOA gate", Proceedings of Electronics Society of IEICE (Institute of Electronics, Information and Communication Engineers), SC-4-2, pp.314-315, 1997. The configuration of the optical switched network described in the above fourth document is basically the same as that shown in Fig. 2, however, the configuration of an optical selector 5 is different from that in the second conventional type example. Fig. 5 is a block diagram showing the configuration of the optical selector 5 (5B) in the optical switched network equivalent to a third conventional type example.

In the above optical selector 5B, a wavelength multiplexed optical signal output from an optical gate for selecting space 30 is input to a multistage wavelength selector 6 composed of an optical wavelength demultiplexer 34, the optical gate 32, an optical wavelength router 31, an optical gate 35 and an optical wavelength multiplexer 36 via an optical combiner 33. The wavelength multiplexed optical signal input to the optical wavelength demultiplexer 34 is branched every 4 wavelengths. A wavelength multiplexed optical signal of wavelengths λ0 to λ3 is input to an optical gate 32-0, a wavelength multiplexed optical signal of wavelengths λ4 to λ7 is input to an optical gate 32-1, a wavelength multiplexed optical signal of wavelengths λ8 to λ11 is input to an optical gate 32-2 and a wavelength multiplexed optical signal of wavelengths λ12 to λ15 is input to an optical gate 32-3.

When only the optical gate 32-0 for example is turned on, the wavelength multiplexed optical signal of the wavelengths λ0 to λ3 is input to the optical wavelength router 31. The optical wavelength router 31 branches the input wavelength multiplexed optical signal every wavelength even when any of the optical gates 32-0 to 32-3 is turned on and outputs it from different output ports. When the wavelength multiplexed optical signal of the wavelengths λ0 to λ3 is input from the optical gate 32-0, an optical signal of the wavelength λ0 is output to an optical gate 35-0, an optical signal of the wavelength λ1 is output to an optical gate 35-1, an optical signal of the wavelength λ2 is output to an optical gate 35-2 and an optical signal of the wavelength λ3 is output to an optical gate 35-3. When only the optical gate 35-0 for example is turned on, an optical signal of the wavelength λ0 is output via the optical wavelength multiplexer 36. As described above, the multistage wavelength selector 6 can selectively output an optical signal of an arbitrary one wavelength of a wavelength multiplexed optical signal of 16 wavelengths by turning on one of the optical gates 32 and one of the optical gates 35.

In the third conventional type example, the number of optical gates required for configuring one optical selector 5B is 24. Therefore, in the whole 256 x 256 optical switched network, 6144 pieces of optical gates are required and the number of optical gates is further reduced to 3/4 of the number in the second conventional type example.

However, in the optical selector 5B in the third conventional type example, the larger the number of the optical gates 30 is, that is, the larger the number of the optical wavelength multiplexers/splitters 4, the more increased is a loss caused by multiplexing by the optical combiner 33. As the optical combiner 33 multiplexes wavelength multiplexed optical signals of the same wavelength λ0 to λ15, an optical wavelength multiplexer using an optical filter such as an arrayed waveguide grating cannot be used and a directional coupler-type optical wavelength multiplexer and others are required to be used. Therefore, when 2n optical signals are multiplexed to one signal, a loss of at least 3n dB is caused. In the example shown in Fig. 5, a loss of at least 12 dB is caused.

In the meantime, a loss caused in the optical wavelength router 31 shown in Fig. 4 in the second conventional type example is at most a few dB and is approximately equal to the loss of the optical wavelength demultiplexer 34 in the third conventional type example. Therefore, when the loss of both from the optical gate 30 to the optical gate 32 is compared, it is known that the loss in the third conventional type example is larger than the loss in the second conventional type example by approximately 12 dB. It causes the reduction of power input to the optical gate 32 that the loss is large and as a result, S/N of an optical signal is deteriorated. That is, if the number of nodes is large, S/N of an optical signal is smaller in the optical switched network in the third conventional type example than that in the second conventional type example and it is difficult to sufficiently lower a bit error rate in an optical receiver at the receiving node 2.

In the third conventional type example, there is also a problem that crosstalk between optical signals is increased. Interference with an optical signal to be received by another optical signal of the same wavelength is called coherent crosstalk. A signal having a difference frequency component of both optical signals mutually causing coherent crosstalk becomes noise for a base band signal to be received. Therefore, the quality of a received signal is remarkably deteriorated. In the third conventional type example, as optical signals of the same wavelength output from different optical wavelength multiplexers/splitters 4 pass the same path in the output of the optical combiner 33, coherent crosstalk is easily caused. Therefore, to prevent coherent crosstalk, it is required that the on-off ratio of the optical gate 30 is very large.

Embodiments of the present invention will be described in detail below.

### [First Embodiment]

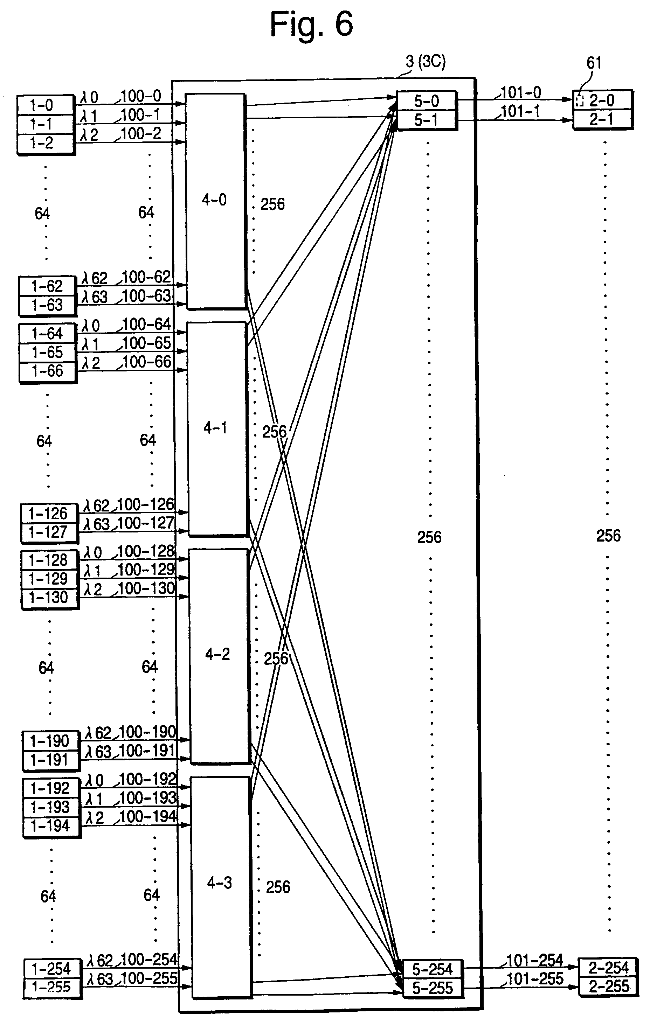

Fig. 6 is a block diagram showing the configuration of a first embodiment.

In an optical switched network equivalent to the first embodiment, for the wavelength of an optical signal, 64 wavelengths of λ0 to λ63 are used. "λ0" is allocated as the transmission wavelength of transmission nodes 1-0, 1-64, 1-128 and 1-192, λ1 is allocated as the transmission wavelength of transmission nodes 1-1, 1-65, 1-129 and 1-193, λ2 is allocated as the transmission wavelength of transmission nodes 1-2, 1-66, 1-130 and 1-194 and hereinafter similarly, λ63 is allocated as the transmission wavelength of transmission nodes 1-63, 1-127, 1-191 and 1-255.

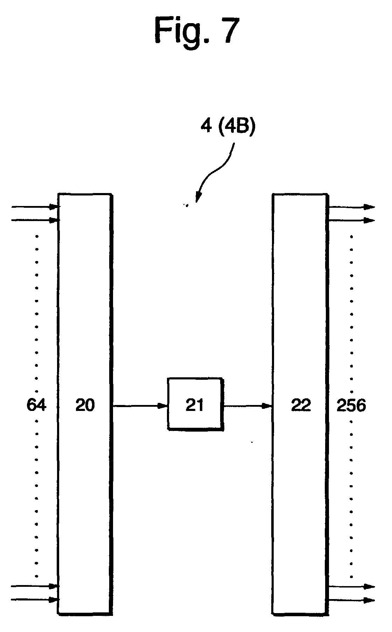

Optical signals of wavelengths λ0 to λ63 sent from optical transmitters at 64 pieces of transmission nodes 1 to which different transmission wavelengths are allocated are input to optical wavelength multiplexers/splitters 4. Fig. 7 is a block diagram showing the configuration of the optical wavelength multiplexer/splitter 4 (4B). Input optical signals of wavelengths λ0 to λ63 are multiplexed by an optical wavelength multiplexer 20 which is an arrayed waveguide grating and is branched in 256 ways by (1 x 256) pieces of optical splitters 22 after the wavelength multiplexed optical signal is amplified by an optical fiber amplifier 21.

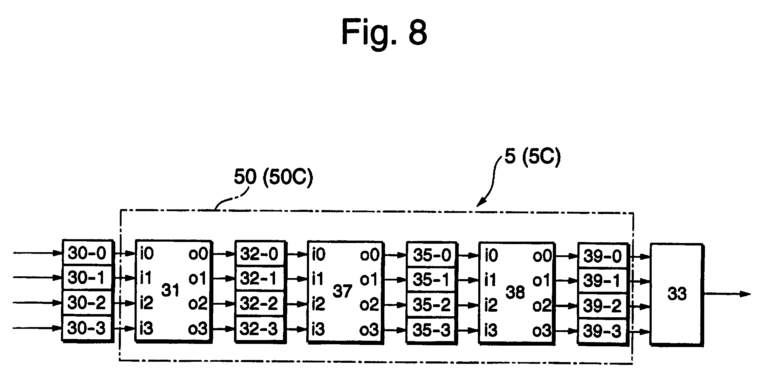

The wavelength multiplexed optical signal output from each optical wavelength multiplexer/splitter 4 (4B) is distributed to 256 pieces of optical selectors 5. Fig. 8 is a block diagram showing the configuration of the optical selector 5 (5C). The optical selector 5C is composed of optical gates for selecting space 30, optical wavelength routers 31, 37 and 38, optical gates for selecting wavelength 32, 35 and 39 and an optical combiner 33. A wavelength selecting section 50 (50C) is configured by the optical wavelength routers 31, 37 and 38 and the optical gates 32, 35 and 39.

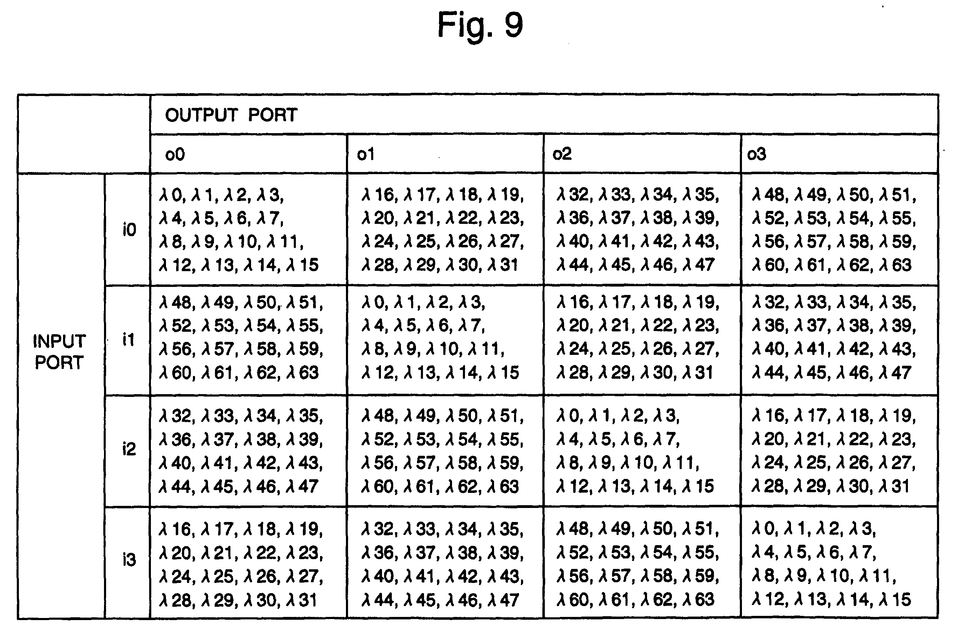

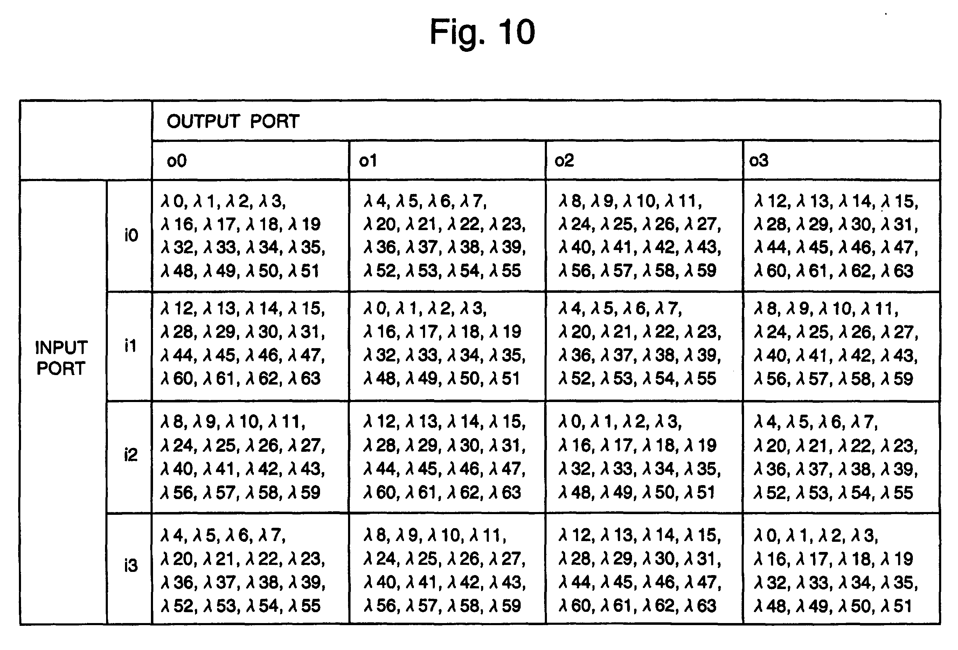

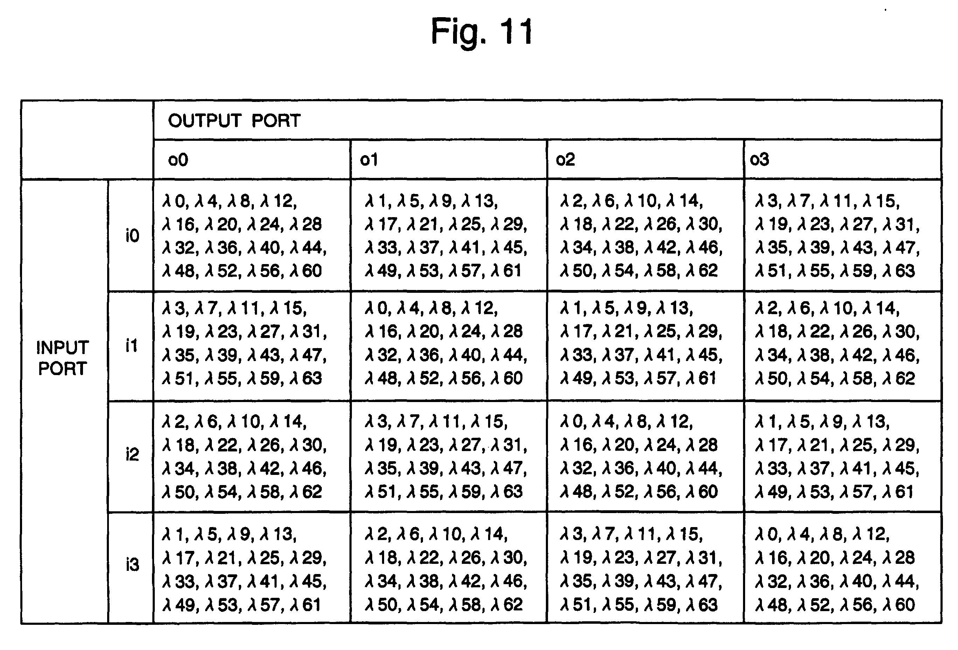

Four input ports of the optical selector 5C are respectively connected to four optical wavelength multiplexers/splitters 4. A wavelength multiplexed optical signal output from a desired optical wavelength multiplexer/splitter 4 can be selectively input to the optical wavelength router 31 by turning on one of the optical gates 30-0 to 30-3 and turning off residual three. The optical wavelength routers 31, 37 and 38 are an arrayed waveguide grating configured by a silica waveguide and their wavelength transmission characteristic forms Latin squares respectively shown in Figs. 9, 10 and 11. Such a wavelength transmission characteristic is easily realized by suitably determining the transmitted bandwidth and a free spectral range of the arrayed waveguide grating.

Suppose that the optical gates 30-0, 32-0, 35-0 and 39-0 are turned on and the left are turned off. At this time, a wavelength multiplexed optical signal of wavelengths λ0 to λ63 is input to the optical wavelength router 31 from an input port i0, the wavelength multiplexed optical signal of wavelengths λ0 to λ15 is output from an output port o0, the wavelength multiplexed optical signal of wavelengths λ16 to λ31 is output from an output port o1, the wavelength multiplexed optical signal of wavelengths λ32 to λ47 is output from an output port o2 and the wavelength multiplexed optical signal of wavelengths λ48 to λ63 is output from an output port o3.

As the optical gate 32-0 is turned on, the wavelength multiplexed optical signal of the wavelengths λ0 to λ15 is is input to the optical wavelength router 37 from the input port i0. Of this, the wavelength multiplexed optical signal of wavelengths λ0 to λ3 is output from the output port o0, the wavelength multiplexed optical signal of wavelengths λ4 to λ7 is output from the output port o1, the wavelength multiplexed optical signal of wavelengths λ8 to λ11 is output from the output port o2 and the wavelength multiplexed optical signal of wavelengths λ12 to λ15 is output from the output port o3.

As the optical gate 35-0 is turned on, the wavelength multiplexed optical signal of the wavelengths λ0 to λ3 is input to the optical wavelength router 37 from the input port i0. Of this, an optical signal of the wavelength λ0 is output from the output port o0, an optical signal of the wavelength λ1 is output from the output port o1, an optical signal of the wavelength λ2 is output from the output port o2 and an optical signal of the wavelength λ3 is output from the output port o3. As the optical gate 39-0 is turned on, after all, only the optical signal of the wavelength λ0 is output from the optical combiner 33.

As described above, in the optical selector 5C in the first embodiment, as the multistage wavelength selector 6 in the third conventional type example, each one of the four optical gates 32, the four optical gates 35 and the four optical gates 39 is turned on. Hereby, an optical signal of an arbitrary one wavelength can be selected out of the wavelength multiplexed optical signal of 64 wavelengths. The optical selector 5C can selectively output an optical signal transmitted from an arbitrary transmission node 1 by the combination of a wavelength selecting function by the optical gates 32, 35 and 39 and a space selecting function by the optical gate 30.

The optical signal output from the optical selector 5C is received by an optical receiver 61 at the receiving node 2.

As described above, receiving nodes 2-0 to 2-255 can respectively receive an optical signal sent from an arbitrary transmission node 1 and the optical gates 30, 32, 35 and 39 turned on in the optical selector 5C at that time are uniquely determined for a desired transmission node 1. Therefore, an optical switch 3 (3C) of the first embodiment is a crossbar switch.

In the optical switched network of the first embodiment, 16 optical gates are used per one optical selector 5 and in the whole optical switched network, 4096 optical gates are used. The above number of optical gates is equivalent to 1/16 of the number of optical gates, 65536 required for realizing the 256 x 256 optical switched network in the similar configuration to that in the first conventional type example, is equivalent to one half of the number of optical gates, 8192 required for configuring the optical switched network in the second conventional type example and is equal to the number of optical gates required in case the number of wavelengths is 64 and the number of optical wavelength multiplexers/splitters 4 is 4 in the optical switched network in the third conventional type example.

The number of wavelengths which can be selected by the optical selector 5C in the first embodiment is determined by multiplying the number of the optical gates 32, 35 and 39 which contribute to select a wavelength. Conversely, to configure the optical selector 5C for selecting a certain number of wavelengths, the number acquired by multiplying the number of optical gates which contribute to select a wavelength every column is required to be equal to the number of wavelengths. In this case, the number of optical gates which contribute to select a wavelength is the smallest in case the number of optical gates per one column is a prime number or 4. That is, in the first embodiment, the number of optical gates which contribute to select a wavelength becomes the smallest by setting the number of optical gates per one column to 4.

Also, when the number of wavelengths is set to 64 and the number of the optical wavelength multiplexers/splitters 4 is set to 4 in the optical switched network in the third conventional type example, an optical combiner 33 shown in Fig. 5 is composed of 4 x 1 optical wavelength multiplexer, however, in the optical wavelength multiplexer, a loss of at least 6 dB is caused. As the loss of the optical wavelength demultiplexer 34 in the third conventional type example and the loss of the optical wavelength router 31 in the first embodiment are similar, the loss from the optical gate 30 to the optical gate 32 in the first embodiment is smaller by at least 6 dB and the bit error rate in an optical receiver 61 at the receive node 2 can be reduced by quantity. The more the number of the optical wavelength multiplexers/splitters 4 is, that is, the larger the scale of the optical switched network is, the more remarkable the above advantage becomes.

Further, in the first embodiment, as optical signals of the same wavelength input from different optical wavelength multiplexers/splitters 4 are output from separate output ports in the optical wavelength router 31, coherent crosstalk is hardly caused. Therefore, in the first embodiment, the on-off ratio required to the optical gate 30 is smaller, compared with that in the third conventional type example.

### [Second Embodiment]

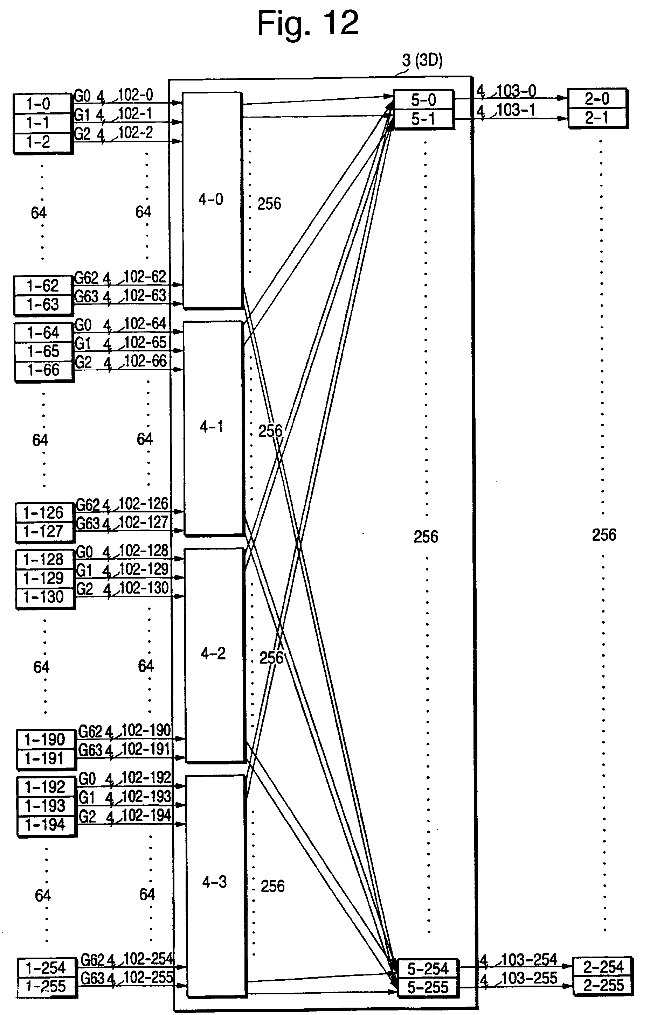

Fig. 12 is a block diagram showing the configuration of a second embodiment.

The configuration of an optical switched network equivalent to the second embodiment is basically equal to that in the first embodiment, however, in the first embodiment, one wavelength is allocated to each transmission node 1, while the second embodiment is different in that a group of wavelengths composed of different four wavelengths is allocated.

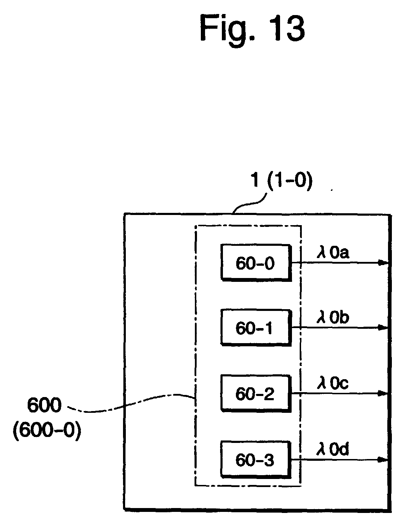

Fig. 13 is a block diagram showing the configuration of a transmission node 1 in the second embodiment. The transmission node 1 is provided with four optical transmitters 60 composing an optical transmitter array 600 and for the send wavelength of these optical transmitters 60, a group of wavelengths G0 composed of wavelengths λ0a, λ0b, λ0c and λ0d is allocated to a transmission node 1-0 for example. The wavelengths λ0a, λ0b, λ0c and λ0d are wavelengths in the vicinity of λ0 in the first embodiment. An optical fiber array 102 in which four optical fibers are bundled is connected between each transmission node 1 and an optical wavelength multiplexer/splitter 4.

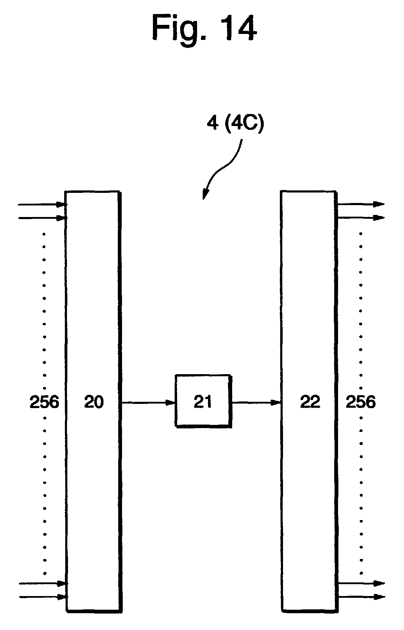

Fig. 14 is a block diagram showing the configuration of the optical wavelength multiplexer/splitter 4 (4C). As each transmission node 1 sends optical signals of four wavelengths, the optical wavelength multiplexer/splitter 4C is equal to the optical wavelength multiplexer/splitter 4B in the first embodiment except that the size of optical wavelength multiplexer 20 is 256 x 1. The output of each optical wavelength multiplexer/splitter 4C is distributed to 256 pieces of optical selectors 5.

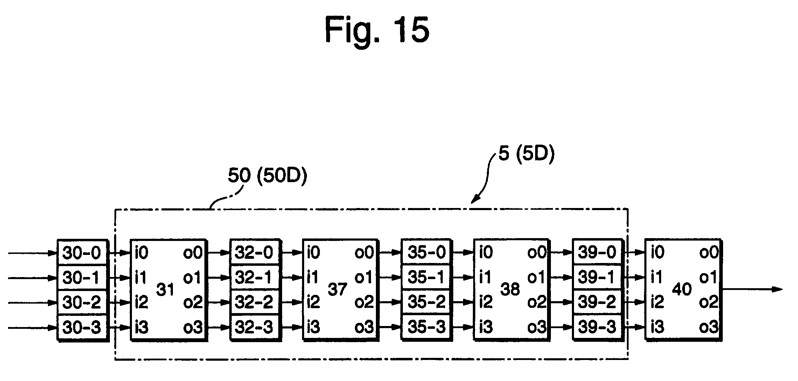

Fig. 15 is a block diagram showing the configuration of the optical selector 5 (5D). The configuration from optical gates 30 to optical gates 39 and the characteristic of optical wavelength routers 31, 37 and 38 are equal to those in the first embodiment. A wavelength selecting part 50 (50D) is composed of the optical wavelength routers 31, 37 and 38 and the optical gates 32, 35 and 39. A group of wavelengths in the second embodiment is composed of four wavelengths respectively in the vicinity of the wavelengths having the same numbers in the first embodiment and the wavelengths λ0a, λ0b, λ0c and λ0d which belong to the group of wavelengths G0 for example act as the wavelength λ0 in the first embodiment.

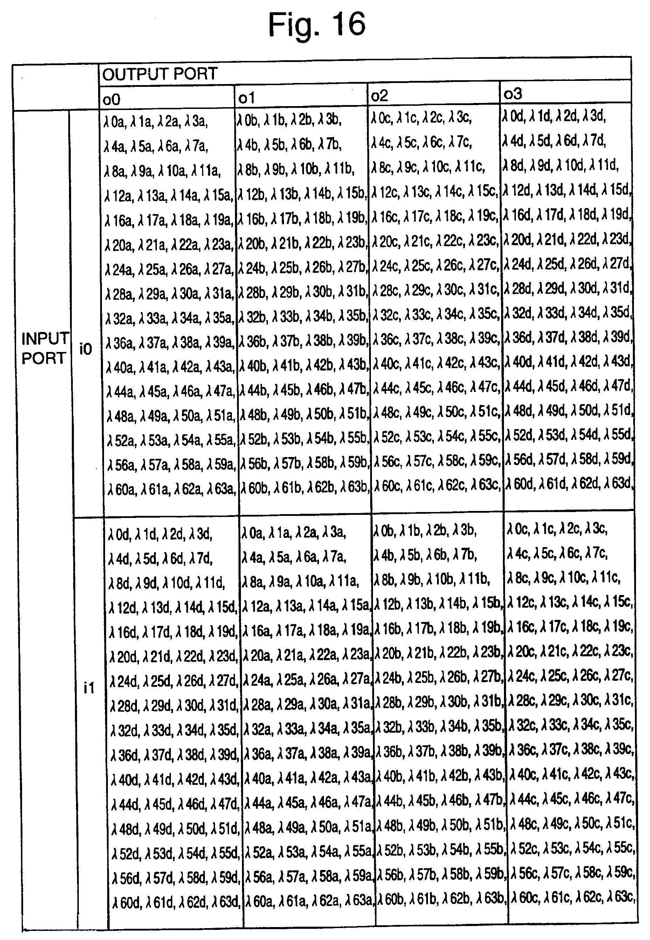

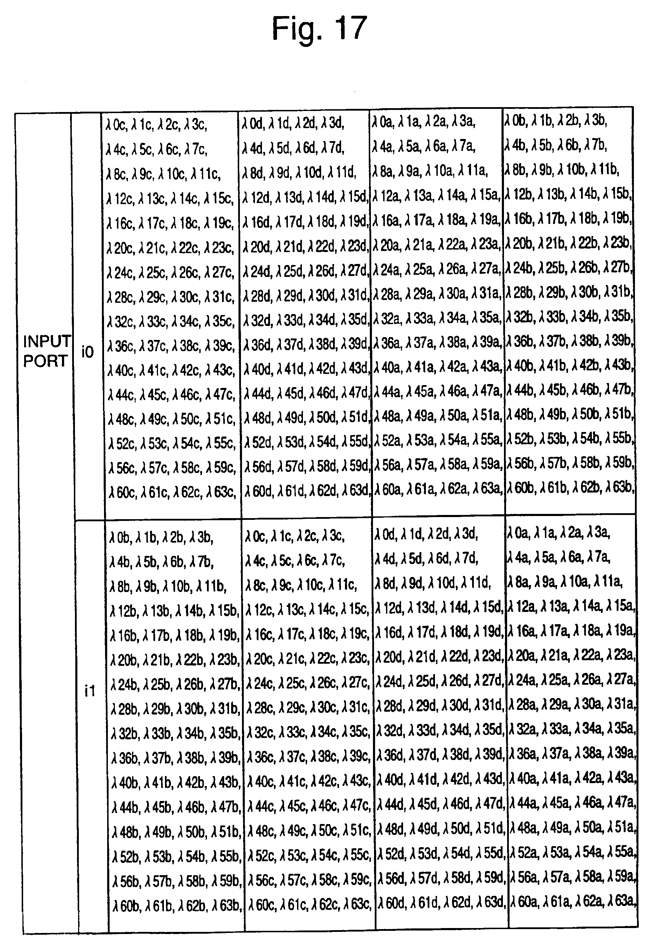

Therefore, if optical gates 30-0, 32-0, 35-0 and 39-0 are turned on, four optical signals of the wavelengths λ0a, λ0b, λ0c and λ0d sent from the transmission node 1-0 are input to an input port i0 of an optical wavelength router 40. The optical wavelength router 40 is an arrayed waveguide grating. Figs. 16 and 17 show its divided wavelength transmission characteristic. A wavelength multiplexed optical signal of a certain group of wavelengths input to the optical wavelength router 40 is branched every wavelength owing to such a wavelength transmission characteristic and is output from different output ports. If a wavelength multiplexed optical signal composed of four optical signals of the wavelengths λ0a, λ0b, λ0c and λ0d is input from the input port i0 for example, optical signals of the wavelengths λ0a, λ0b, λ0c and λ0d are respectively output from output ports o0, o1, o2 and o3.

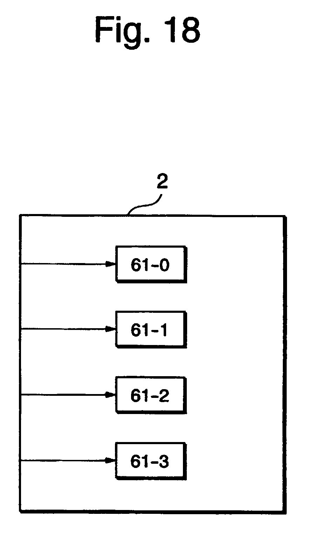

Optical signals output from the optical selector 5D are transmitted in an optical fiber array 103 in which four optical fibers are bundled and are input to a receiving node 2. Fig. 18 is a block diagram showing the configuration of the receiving node 2. In the receiving node 2, four optical signals input from the optical fiber array 103 are respectively received by four optical receivers 61.

As described above, receiving nodes 2-0 to 2-255 can receive a wavelength multiplexed optical signal respectively sent from an arbitrary transmission node 1 and optical gates 30, 32, 35 and 39 turned on in the optical selector 5 at that time are uniquely determined for a desired transmission node 1. Therefore, optical switch 3 (3D) of the second embodiment is a crossbar switch.

The optical switched network of the second embodiment has advantageous features, that is, that the required number of optical gates is small, the loss from the optical gate 30 to the optical gate 32 is small and coherent crosstalk is hardly caused as in the first embodiment. Further, in the second embodiment, as four optical signals per one set of a send node and a receiving node are sent and received, the fourfold quantity of information can be sent and received if a bit rate per one optical signal is equal. That is, in the second embodiment, fourfold throughput is acquired using optical gates of the same number as that in the first embodiment.

### [Third Embodiment]

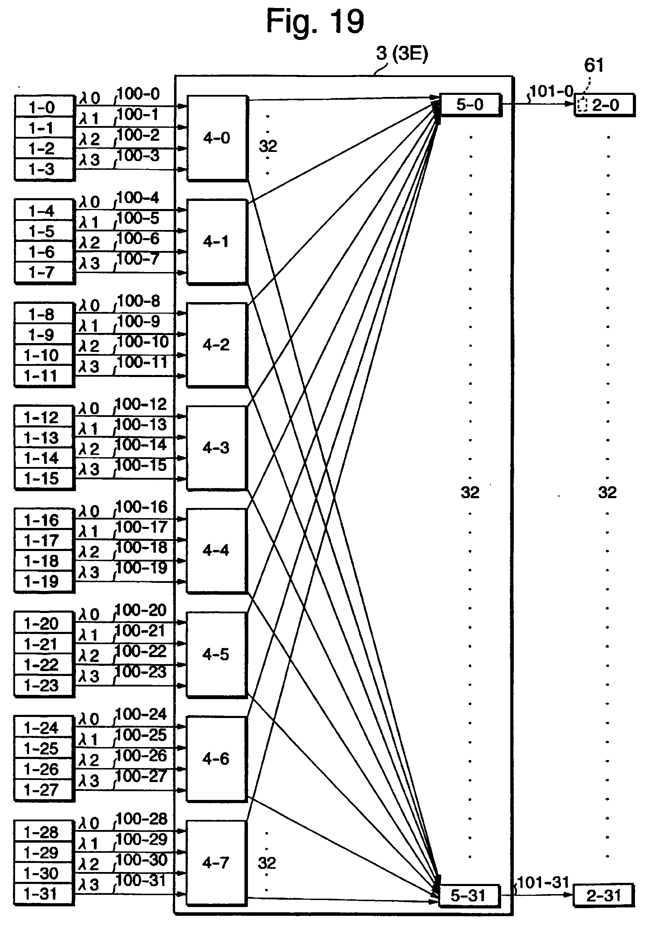

Fig. 19 is a block diagram showing the configuration of a third embodiment.

The configuration of an optical switched network of the third embodiment is basically equal to that in the second conventional type example, however, the configuration of an optical selector 5 is different. Here, only the configuration and the operation of the optical selector 5 will be described.

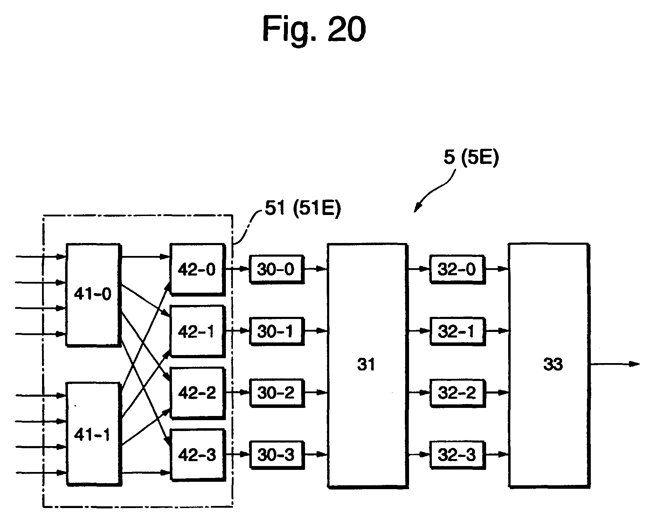

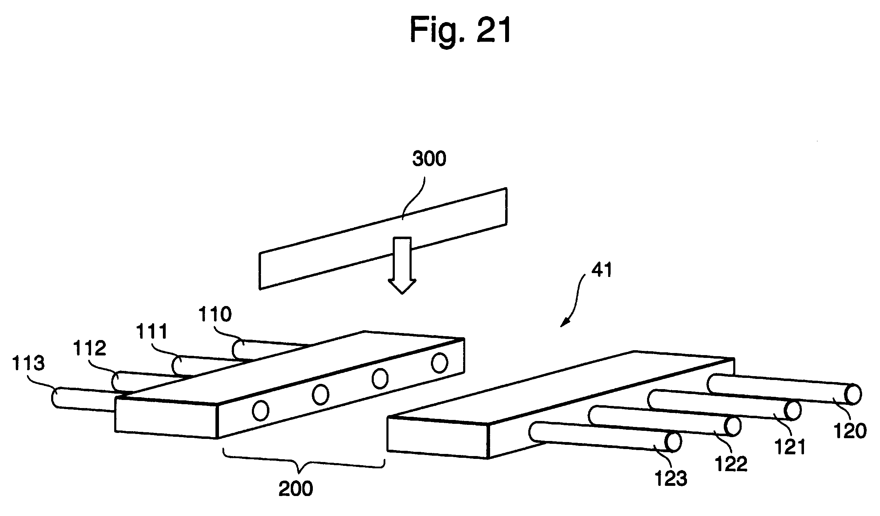

Fig. 20 is a block diagram showing the configuration of the optical selector 5 (5E). In the optical selector 5E in the third embodiment, arrayed optical gates 41 and an optical wavelength multiplexer 42 are added before the optical selector 5A shown in Fig. 4 in the second conventional type example. Fig. 21 is an outside perspective view showing the configuration of the arrayed optical gates 41.

The arrayed optical gates 41 are mechanical optical gates. An optical signal respectively input to optical fibers 110, 111, 112 and 113 is respectively incident upon optical fibers 120, 121, 122 and 123 via a space propagation part 200 which is a collimator optical system when a shielding plate 300 is not inserted. In this state, four paths are all turned on. As four optical signals are shielded in the space propagation part 200 when the shielding plate 300 is inserted, no optical signal is incident upon the optical fibers 120, 121, 122 and 123 and the optical fibers are turned off.

As described above, as for the arrayed optical gates 41, four optical signals (four paths) can be simultaneously turned on or off and four arrayed optical gates are configured. In Fig. 20, the optical selector 51 (51E) composed of 2 arrays each of which is composed of four optical gates, provided with two paths in each of which four paths can be simultaneously turned on or off and which can selectively turn on or off the above two paths is configured by combining two arrayed optical gates 41 (41-0 and 41-1) and four optical wavelength multiplexers 42 (42-0 to 42-3). For example, when the arrayed optical gates 41-0 are turned on and 41-1 are turned off, tour optical signals input to the arrayed optical gates 41-0 are output from the optical wavelength multiplexers 42-0 to 42-3.

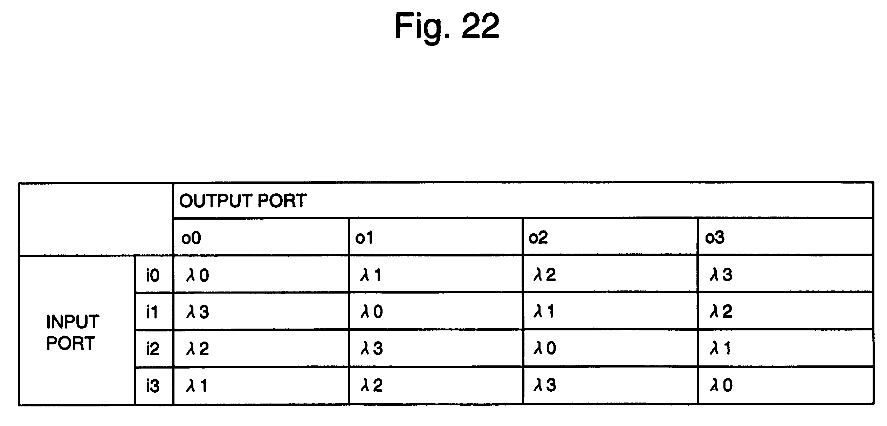

A wavelength multiplexed optical signal of wavelengths λ0 to λ3 input from one of eight input ports of the optical selector 5E can be selectively input to the optical wavelength router 31 by turning on each one of the above arrayed optical gates 41 and the optical gates 30. The wavelength transmission characteristic of the optical wavelength router 31 is shown in Fig. 22, an input wavelength multiplexed optical signal of the wavelengths λ0 to λ3 is branched every wavelength and is output from four output ports. Only an optical signal of an arbitrary one wavelength can be output from the optical combiner 33 by turning on only one of four optical gates 32.

The optical signal output from the optical selector 5 (5E) is received by an optical receiver 61 at a receiving node 2.

As described above, receiving nodes 2-0 to 2-31 can respectively receive an optical signal sent from an arbitrary transmission node 1. The arrayed optical gate 41, the optical gate 30 and the optical gate 32 respectively turned on in the optical selector 5E at that time are uniquely determined for a desired send node 1. Therefore, optical switch 3 equivalent to the third embodiment is a crossbar switch.

To configure the optical selector 5E in the third embodiment, two arrays of optical gates and eight optical gates are required. A 32 x 32 optical switched network requires 64 arrays of optical gates and 256 optical gates. On the other hand, to configure a 32 x 32 optical switched network having the configuration described in the second conventional type example and four wavelengths, 384 optical gates are required. As mechanical arrayed optical gates of 4 gates have only one movable part, the cost is approximately the same as for a single mechanical optical gate. As a signal line and a driving circuit for control are required for an active element such as an optical gate, it also contributes to the reduction of a signal line and a driving circuit to reduce the total number of arrayed optical gates and optical gates, that is, the number of optical gates. Therefore, the cost can be reduced by reducing the number of optical gates by applying arrayed optical gates as in the third embodiment.

In the optical selector 5E in the third embodiment, the number of optical gates 30 is reduced up to 4 by providing the arrayed optical selector 51E before the optical gates 30 and is equal to the number of the optical gates 32. In an optical wavelength router using an arrayed waveguide grating, it is a standard to provide the same number of input ports and output ports. Since a wavelength router having different numbers of input and output ports, such as 8 x 4, is a custom article, it is expensive. That is, in the third embodiment, the number of optical gates 30 can be set independently from the number of optical wavelength multiplexers/splitters 4 by providing the arrayed optical selector 51E before the optical gates 30. Further, a standardized optical wavelength router 31 which has input and output ports of the same number, such as 4, can be employed by equalizing the number of paths M of the arrayed optical gates 41 to the number of wavelengths W. As a result, cost reduction for the wavelength router is realized.

### [Fourth Embodiment]

The configuration of an optical switched network equivalent to a fourth embodiment is basically equal to that in the third embodiment, however, the configuration of an optical selector 5 is different. Here, only the configuration and the operation of the optical selector 5 will be described.

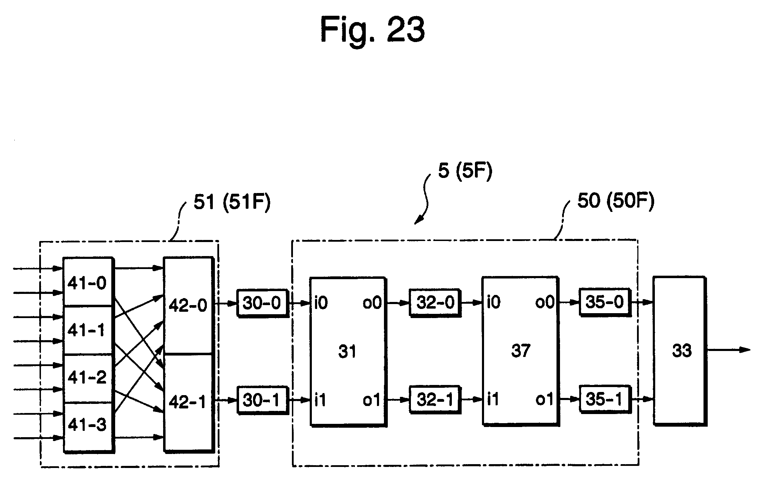

Fig. 23 is a block diagram showing the configuration of the optical selector 5 (5F). An optical arrayed selector 51 (51F) composed of four arrayed optical gates 41, each having two switches, and two optical wavelength multiplexers 42. The optical arrayed selector 51 and optical gates 30 fulfill a function for selecting space and a wavelength multiplexed optical signal input from arbitrary one of eight input ports of the optical selector 5F can be input to the optical wavelength router 31 by turning on each one of the arrayed optical gates 41 and the optical gates 30.

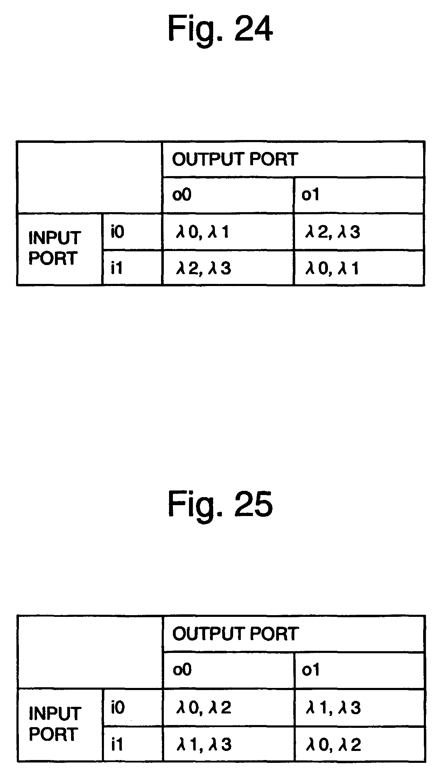

The wavelength transmission characteristic of the optical wavelength router 31 and the optical wavelength router 37 is respectively shown in Fig. 24 and Fig. 25. Therefore, when a wavelength multiplexed optical signal of wavelengths λ0 to λ3 is input from an input port i0 or i1 of the optical wavelength router 31, only an optical signal of arbitrary one wavelength can be output from an optical combiner 33 by turning on each one of the optical gates 32 and the optical gates 35. As described above, the optical selector 5F in the fourth embodiment realizes the similar function to that of the optical selector 5E in the third embodiment.

To configure the optical selector 5F in the fourth embodiment, four arrayed optical gates and six optical gates are required. A 32 x 32 optical switched network requires, in total, 128 pieces of arrayed optical gates and 192 optical gates. That is, in the fourth embodiment, the number of optical gates is also smaller than that in case a 32 x 32 optical switched network having the configuration described in the second conventional type example in which the number of wavelengths is set to 4 is configured and cost can be reduced.

In the fourth embodiment, as a function for selecting a wavelength is realized by multistage optical gates and the optical wavelength router, the more remarkable the effect of reducing the number of optical gates becomes the more the number of wavelengths is. Particularly, the number of optical gates which contribute to the selection of a wavelength can be minimized by setting the number per one stage of optical gates which contribute to the selection of a wavelength to a prime number or 4.

Also, as in the optical selector 5F in the fourth embodiment, the number of optical gates 30, 32 and 35 is not required to be the same as the number of the wavelengths or the number of the optical wavelength multiplexers/splitters 4, the constraint of the optical wavelength routers 31 and 37 for the number of ports is small and a standard 2 x 2 optical wavelength router can be used.

### [Fifth Embodiment]

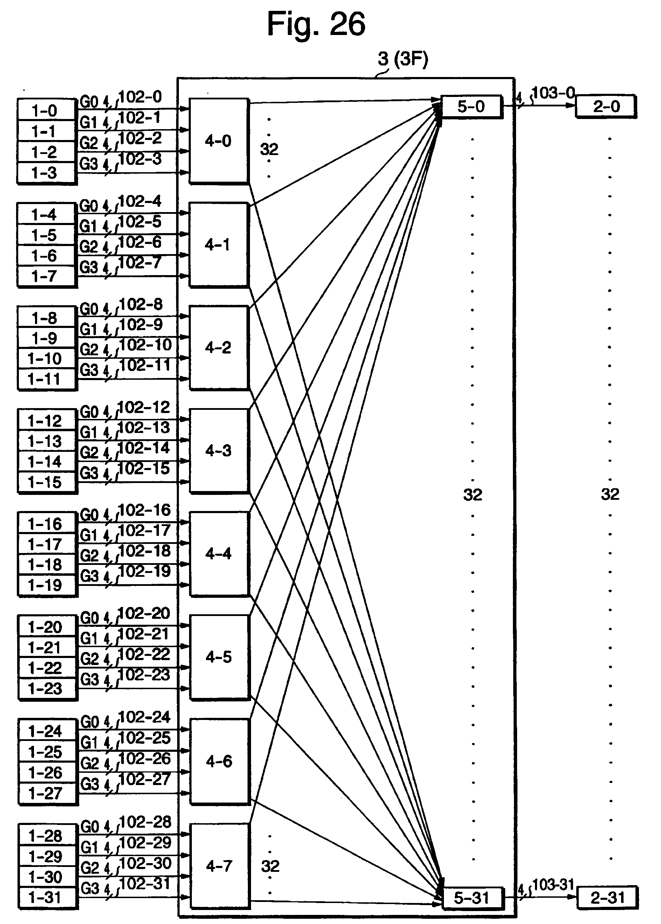

Fig. 26 is a block diagram showing the configuration of a fifth embodiment.

The relationship of an optical switched network equivalent to the fifth embodiment with that in the fourth embodiment is equal to the relationship of that in the second embodiment with that in the first embodiment. That is, in the fourth embodiment, one wavelength is allocated to each send node 1, while in the fifth embodiment, a group of wavelengths composed of different four wavelengths is allocated. The configuration of the send nodes 1 and receive nodes 2 in the fifth embodiment is equal to the configuration of the send nodes 1 and the receive nodes 2 in the second embodiment, and the send node 1 and an optical wavelength multiplexer/splitter 4, and an optical selector 5 and the receive node 2 are respectively connected by an optical fiber array 102 each element of which is composed of four optical fibers and an optical fiber array 103 each element of which is composed of four optical fibers.

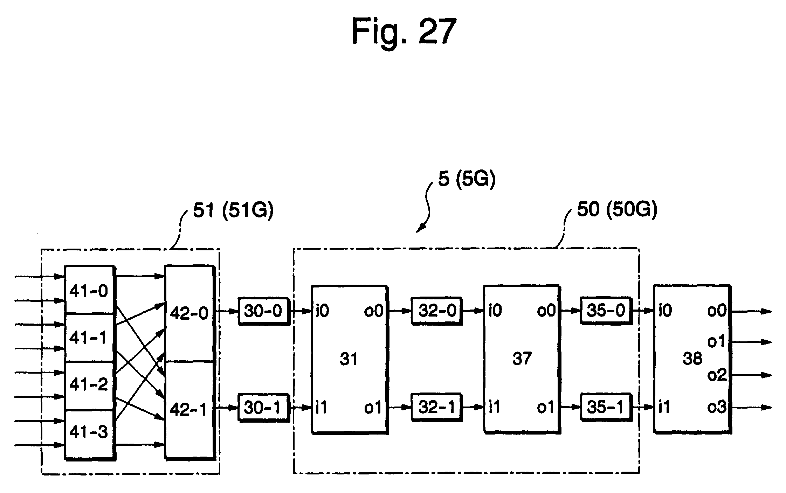

Fig. 27 is a block diagram showing the configuration of the optical selector 5 (5G). The configuration from arrayed optical gates 41 to optical gates 35 and the characteristic of optical wavelength routers 31 and 37 are equal to those in the fourth embodiment. A group of wavelengths in the fifth embodiment is composed of four wavelengths in the vicinity of wavelengths having the same numbers in the fourth embodiment and wavelengths λ0a, λ0b, λ0c and λ0d which belong to a group of wavelengths G0 for example act as the wavelength λ0 in the fourth embodiment.

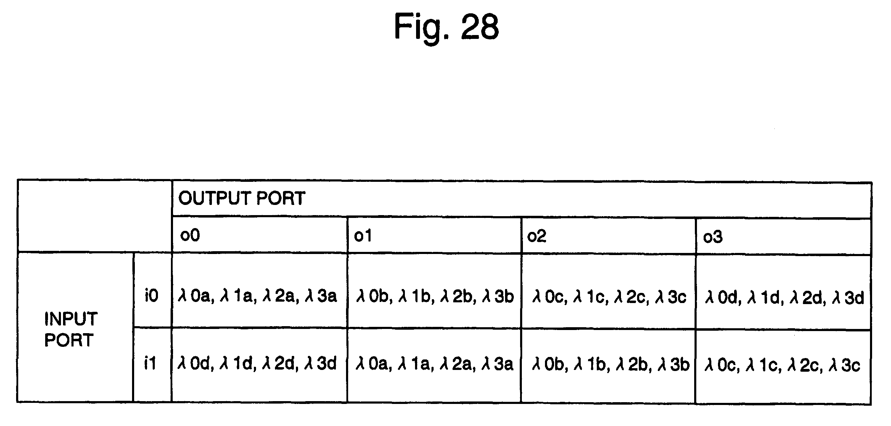

Therefore, if an arrayed optical gate 41-0, optical gates 30-0, 32-0 and 35-0 are turned on, four optical signals of the wavelengths λ0a, λ0b, λ0c and λ0d sent from a transmission node 1-0 are input to an input port i0 of an optical wavelength router 38. The optical wavelength router 38 is an arrayed waveguide grating and its wavelength transmission characteristic is shown in Fig. 28. A wavelength multiplexed optical signal of a certain group of wavelengths input to the optical wavelength router 38 is branched every wavelength by such a wavelength transmission characteristic and is output from different output ports. For example, if a wavelength multiplexed optical signal composed of four optical signals of the wavelengths λ0a, λ0b, λ0c and λ0d is input from the input port i0, optical signals of the wavelengths λ0a, λ0b, λ0c and λ0d are respectively output from output ports o0, o1, o2 and o3.

As described above, receiving nodes 2-0 to 2-31 can receive a wavelength multiplexed optical signal sent from an arbitrary send node 1 and the arrayed optical gate 41, the optical gates 30, 32 and 35 respectively turned on in the optical selector 5G at that time are uniquely determined for a desired transmission node 1. Therefore, an optical switch 3 (3F) in the fifth embodiment is a crossbar switch.

The optical switched network in the fifth embodiment produces the similar effect that the number of required optical gates is small and others to the effect in the fourth embodiment. Further, in the fifth embodiment, as four optical signals are sent and received per one set of the transmission node and the receiving node, the fourfold quantity of information can be sent and received if the bit rate per one optical signal is the same. That is, it is known that in the fifth embodiment, fourfold throughput is acquired using optical gates of the same number as that in the fourth embodiment.

In the first to fifth embodiments, the arrayed waveguide grating configured by a silica waveguide is used for the optical wavelength router, however, the embodiment of the optical wavelength router is not limited to this. A semiconductor waveguide and a polymer waveguide may be also used in place of the silica waveguide or when a reflection type grating, an optical fiber grating, an interference film optical filter, Fabry-Perot type optical filter, Mach-Zehnder type optical filer and others are used in place of the arrayed waveguide grating, the optical wavelength router can be also configured. Also, the wavelength transmission characteristic of the optical wavelength router is not limited to the ones shown in the tables and is not necessarily required to form Latin square. When an optical signal of a desired wavelength is acquired in final output in the optical selector, it can be said that the function of the optical wavelength router in the present invention is fulfilled.

Whereas in the first to fifth embodiments, the semiconductor optical amplifier is used for an optical gate, the embodiment of an optical gate is not limited to this. For example, a semiconductor electro-absorption type optical modulator and others also show an excellent characteristic as an optical gate, and an optical switch using the electro-optic effect, the acousto-optic effect, the thermo-optic effect and others of a crystal of lithium niobate and the material of polymer resin and others and an optical switch using liquid crystal as a shutter can be also used for an optical gate. Also, a mechanical optical switch can be used for an optical gate the cost of which is low though the acting speed is relatively slow.

In the third to fifth embodiments, an arrayed optical selector acquired by combining the mechanical arrayed optical gate and the optical wavelength multiplexer/splitter is used, however, the embodiment of an arrayed optical selector is not limited to this. An optical switch using the electro-optic effect, the acousto-optic effect, the thermo-optic effect and others of a crystal of lithium niobate and the material of polymer resin and others, a liquid crystal optical switch, a mechanical optical switch and others can be used for an arrayed optical selector in place of the arrayed optical gate. Or a semiconductor optical amplifier, an electro-absorption type optical modulator and others may be also used for an arrayed optical gate.

In the first to fifth embodiments, the optical wavelength multiplexer/splitter acquired by combining the optical wavelength multiplexer which is the arrayed waveguide grating, the optical fiber amplifier and the optical wavelength power divider is used, however, the embodiment of an optical wavelength multiplexer/splitter is not limited to this. For example, a star coupler can be also used for an optical wavelength multiplexer/splitter. Furthermore, the optical wavelength multiplexer/splitter can be replaced by an optical combiner/splitter.

Also, in the second embodiment shown in Fig. 12 and the fifth embodiment shown in Fig. 26, optical signals of four wavelengths are separately sent from the transmission node 1, however, optical signals of four wavelengths are multiplexed and may be sent as a wavelength multiplexed optical signal as well.

According to the optical switch and the optical switched network according to the present invention, the following effect can be acquired. The three effects are: 1) the number of required switching elements such as an optical gate can be reduced; 2) the loss of an optical signal in the optical receiver is small; and 3) crosstalk between optical signals is small, compared with the case that the similar optical switch and the similar optical switched network are configured by prior art.

While this invention has been described in connection with certain preferred embodiments, it is to be understood that the subject matter encompassed by way of this invention is not to be limited to those specific embodiments. On the contrary, it is intended for the subject matter of the invention to include all alternative, modification and equivalents as can be included within the spirit and scope of the following claims.

## Claims

**1.** An optical switch comprising at least one cascaded optical circuit, wherein:
said optical circuit comprises:
a first optical gate array including plurality of optical gates; and
an optical wavelength router that outputs each optical signal input from an input port connected to each of said plural optical gates from any output port according to a wavelength.

**2.** An optical switch comprising at least one cascaded optical circuit, a first optical gate array connected to the last one of said at least one optical circuit and an optical wavelength multiplexer connected to said first optical gate array, wherein:
said at least one optical circuit comprises:
a second optical gate array including a plurality of optical gates; and
an optical wavelength router that outputs each optical signal input from an input port connected to each optical gate of said second optical gate array from any output port according to a wavelength.

**3.** An optical switched network, comprising:
plural optical transmitters for sending an optical signal, each, of differing wavelengths; respectively;
plural optical combiners/splitters for combining optical signals sent from said plural optical transmitters and branching said combined optical signal and outputting it from plural output ports; and
plural optical switches according to Claim 1 or 2 connected to each output port of said plural optical combiners/splitters;

**4.** An optical switch, comprising:
an arrayed optical selector provided with plural sets of plural paths which can be collectively turned on or off in which the on and off of each of said sets of plural paths can be selectively switched;
a first optical gate array including optical gates respectively connected to the output port of said arrayed optical selector;
an optical wavelength router for outputting each of optical signals input from an input port respectively connected to said optical gates included in said first optical gate array, from any of said router's output ports selected, respectively; according to the wavelength of the respective optical signal; a second optical gate array including optical gates respectively connected to the output port of said optical wavelength router; and
an optical wavelength multiplexer for multiplexing and outputting optical signals output from optical gates included in said second optical gate array.

**5.** The optical switch according to anyone of Claims 1, 2 and 4, wherein:
said optical switch further comprises an optical receiver for receiving an optical signal output from said optical wavelength multiplexer.

**6.** The optical switch according to Claim 4, wherein:
the number of said input ports and the number of said output ports of said optical wavelength router are equal.

**7.** An optical switch provided with an arrayed optical selector having plural sets of plural paths which can be collectively turned on or off in which the on and off of each of said sets of plural paths can be selectively switched, and at least one cascaded optical circuit, wherein:
said optical circuit comprises:
a first optical gate array comprising plural optical gates; and
an optical wavelength router for outputting each of optical signals input from an input port respectively connected to optical gates of said first optical gate array, from any of said router's output ports selected, respectively, according to the wavelength of the respective optical signal.

**8.** The optical switch according to Claim 7 , further comprising:
a second optical gate array connected to the output of the last one of said at least one optical circuit; and
an optical wavelength multiplexer for multiplexing optical signals output from optical gates composing said second optical gate array and outputting it.

**9.** The optical switch according to anyone of Claims, 1, 2, 4 or 7, wherein:
said optical wavelength reouter comprises a Latin router.

**10.** An optical switched network, comprising:
plural optical transmitters for sending optical signals of plural wavelengths;
optical combiners/splitters for combining optical signals sent from said plural optical transmitters and branching a combined optical signal and outputting it from plural output ports; and
an optical switch according to Claim 4 connected to different output ports of said plural optical wavelength multiplexers/splitters.

**11.** An optical switched network, comprising:
plural optical transmitters for sending optical signals of plural wavelengths;
plural optical combiners/splitters to which optical signals sent from said plural optical transmitters are input for combining, for branching said combined optical signal and outputting it from output ports; and
an optical switch according to Claim 7 the input ports of which are connected to different output ports of said plural optical wavelength multiplexers/power dividers. a prime number or 4.

**19.** The optical switch according to Claim 13, wherein:
the number off optical gates in said optical gate array is a prime number or 4.

**12.** The optical switch according to anyone of Claims 1, 2, 7 or 8, wherein:
the number of optical gates in said optical gate array is a prime number or 4.

**13.** The optical switched network according to anyone of Claims 3, 10 or 11, wherein said optical combiner/splitter combines using wavelength multiplexing.
